Europäisches Patentamt

**European Patent Office**

**Office européen des brevets**

(11) Publication number: **0 198 803**
A2

# EUROPEAN PATENT APPLICATION

(21) Application number: **86830084.9**

(22) Date of filing: **11.04.86**

(51) Int. Cl.⁴: **G 01 N 27/26**

(30) Priority: **19.04.85 IT 2157485 U**

(43) Date of publication of application: **22.10.86**
**Bulletin 86/43**

(84) Designated Contracting States: **AT BE CH DE FR GB LI NL SE**

(71) Applicant: **Morlacchi, Carla, Via Guido Rossa, 7, I-20090 Buccinasco (Milano) (IT)**

(72) Inventor: **Morlacchi, Carla, Via Guido Rossa, 7, I-20090 Buccinasco (Milano) (IT)**

(74) Representative: **Cicogna, Franco, Ufficio Internazionale Brevetti Dott.Prof. Franco Cicogna Via Visconti di Modrone, 14/A, I-20122 Milano (IT)**

(54) **An automatic machine for the electrophoresis of blood.**

(57) A machine for performing blood electrophoresis with an automatic cycle of operations comprises a support (3) carrying a washing vessel (5), a sample-holder (6) and a treatment vessel (8) all adjacent one another and aligned in a row, there being provided a carriage (20), movable on the support (3) and carrying a sampling comb (21) which, upon displacement of the carriage (20) can be selectively introduced into the washing vessel, the sample-holder or the treatment vessel, a microprocessor is provided to control the sequence of movements and dwell times of the comb (21) in order to perform the analysis operations in a repeatable manner.

0198803

- 1 -

<u>"An Automatic Machine for the Electrophoresis of Blood".</u>

The present invention relates to an automatic machine for the electrophoresis of blood.

The electrophoresis of blood is a test by means of which the proteins present in the blood are analysed. Currently,for this purpose, the only known machines are extremely complex and bulky, and because of their high cost they cannot easily be acquired by small analysis laboratories. These therefore have to make use of procedures which do not allow a precise test standardisation to be obtained, with consequent lack of precision in the analyses themselves.

The object of the present invention is to overcome this problem by providing an extremely compact and low cost machine by means of which it will be possible automatically to perform the various procedures necessary for effecting electrophoresis, whilst at the same time obtaining almost automatic analysis of the blood samples.

According to the present invention there is provided a machine for performing blood electrophoresis with an automatic cycle of operations, characterised by the fact that it comprises a support carrying a washing vessel, a sample-holder and a treatment vessel adjacent one another, there being provided a carriage movable on the said support and carrying a sampling comb which, upon displacement of the carriage, can be selectively introduced into the washing vessel, the sample-holder or the treatment vessel.

The present invention thus provides a machine which will allow the various processes of electrophoresis of microproteins, lipoproteins, haemoglobin and others to be performed automatically with the various process parameters such as the dwell time, applied voltages on the electrodes, the overall time, the quantity of serum to be deposited and the position of the deposit all being predetermined and set into the machine in advance.

A particular advantage of the present invention is that it provides a machine which, in practice, may be controlled by a microprocessor which can be operated by means of a keyboard, and which is thus easy and quick to use. Another advantage of the present invention is that it provides a machine which, becuase of its particular constructional characteristics, will be able to offer the widest guarantees of reliability and security in use, allowing a constant repeatability of results, thus obtaining a high degree of standardisation in the performance of the analyses. A further advantage of the present invention lies in the fact that it provides a machine which can be easily produced starting from elements and materials which are readily commercially available, and which, moreover, will be advantageous from an economic point of view.

One embodiment of the present invention will now be more particularly described, by way of example, with reference to the accompanying drawings, in which:

Figure 1 is a schematic perspective view of a blood electrophoresis machine formed as an embodiment of the invention;

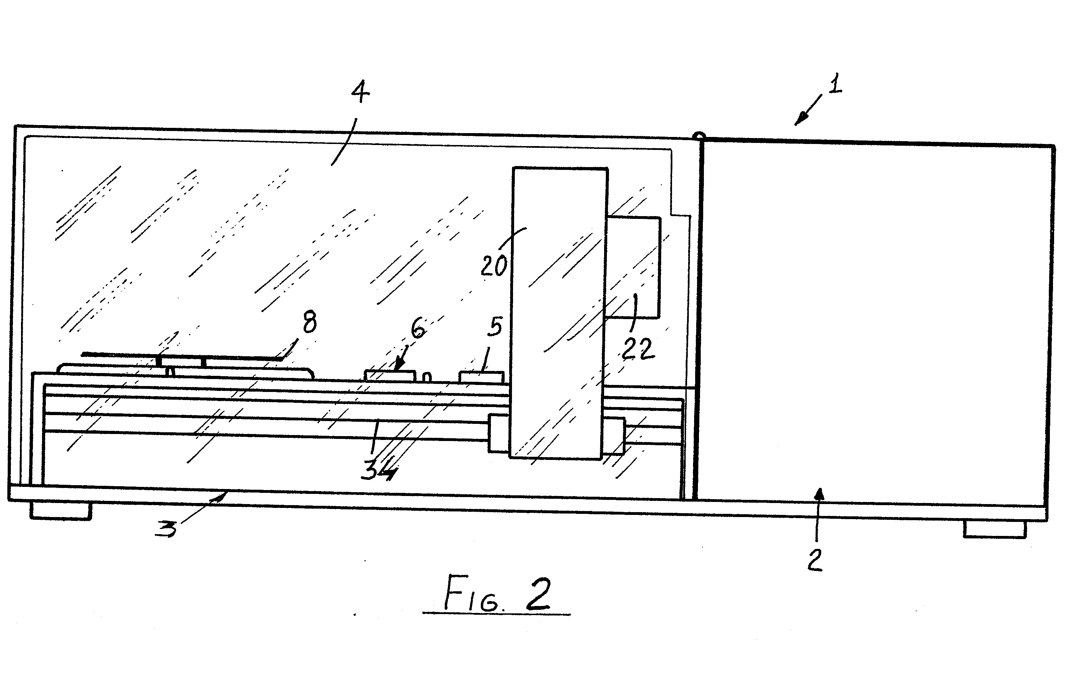

Figure 2 is a front view of the machine shown in Figure 1; and

Figure 3 is a side view of the machine shown in Figure 1.

Referring now to the drawings, a blood analysing, automatic-deposition electrophoresis machine is generally indicated with the reference numeral 1; this machine comprises a support base 2 which has a substantially rectangular shape with a forwardly projecting frontal platform 3 removably closable by means of a cover 4 of optically transparent material.

On the frontal platform 3 there are carried, adjacent one another, a washing vessel 5, a sample-holder 6, and a treatment vessel 8. The sample-holder is in the form of a strip provided with a plurality of groups of small cells 7 in which the serum to be analysed is placed, and the treatment vessel 8, which is advantageously located adjacent the sample-holder strip, is also separated into compartments 9 corresponding to the groups of cells 7 of the sample-holder strip. Within the treatment vessel there are located, in a manner known per se, two platinum electrodes 14 which can be held at a predeterminable potential difference in such a way as to cause
the migration of the deposited proteins, and the
treatment vessel will therefore also be referred to as a
migration vessel.

On the platform 3 there is carried a slidably movable
carriage 20 which, as illustrated in the drawings, is in
the form of a bridge which carries a comb 21 provided
with a plurality of teeth each of which can be
individually introduced into a respective cell 7 of the
sample-holder strip in such a way as to withdraw a
certain quantity of serum.

For control of the analysing process the machine is
provided with a microprocessor which can be set at will
by means of a keyboard 33 so as to regulate the
operating parameters such as the time taken to move
between positions, the potential difference between the
electrodes, the time taken for the analysis cycle, the
quantity of serum to be deposited etc. In this way it
is possible to set up a predetermined automatic
operating cycle.

The carriage 20 is guided for horizontal movement on two
guides 34 and is driven by a notched belt 26 which
passes over two pulleys 27 and 28.

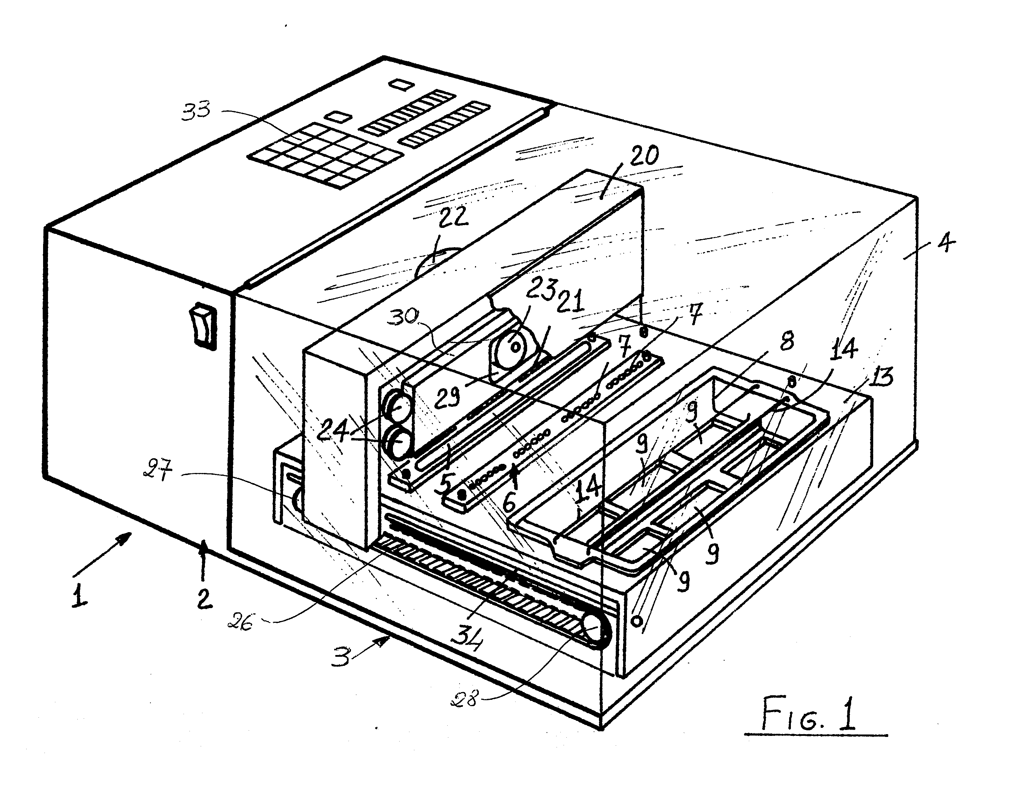

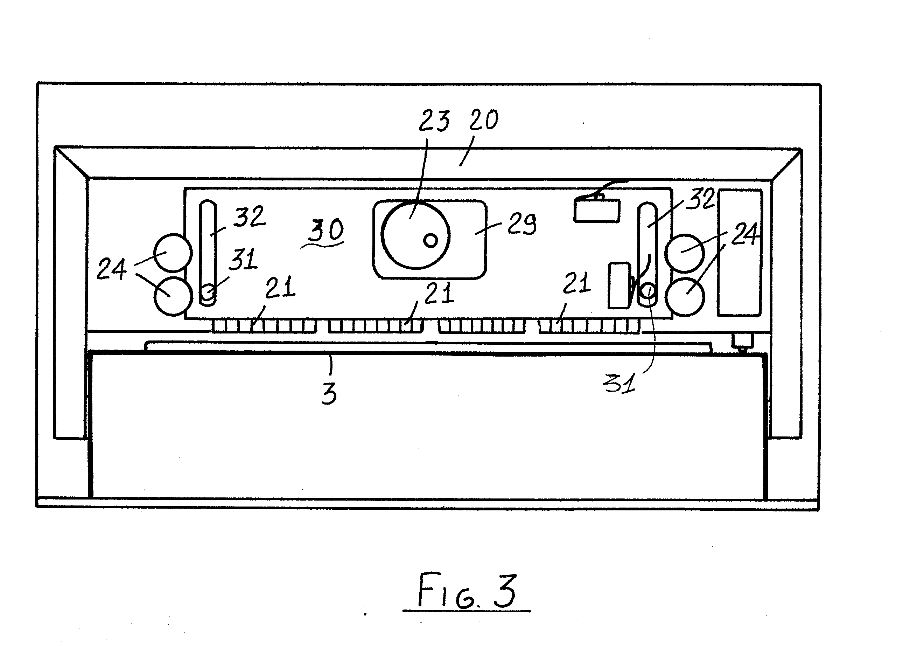

As can be seen in Figures 1 and 3 the comb 21 is carried
by a plate 30 supported at its opposite ends by two
pairs of bearing rollers 24, and is formed with two
slots 32 into which guide pins 31 engage such that the
plate 30 slides on the pair of pins 31 and is guided thereby.

The comb 21, together with the plate 30 is raised and lowered in its vertical rectilinear movements by the action of a geared motor 22 which drives a cam 23 to rotate. This cam 23 engages in a rectangular aperture 29 in the plate 30.

The machine described above operates as follows:

Initially, the comb 21 is made to descend from a raised position on the carriage 20, whilst the latter is positioned above the washing vessel 5 so that the teeth of the comb 21 enter the vessel itself for a washing operation to eliminate all impurities which may be present. Subsequently, the comb is raised and after a predetermined delay time, to allow for drying, the carriage is positioned over the sample-holder strip and the comb 21 caused first to descend and then to rise in such a way as to perform the desired serum withdrawal. It will be appreciated, of course, that each cell will in practice have a different serum sample allowing the simultaneous performance of a plurality of different analyses.

Once the serum withdrawal step has been performed and the comb 21 raised upwards out from the cells 7 the carriage 20 is caused to move horizontally to position the comb over the migration chamber into which the comb 21 is lowered so that, a manner known per se, the analysis phase itself can take place due to the migration of the proteins in the blood sample caused by the potential difference applied between the platinum electrodes. After this the comb 21 is raised and the carriage translates to a position over the washing vessel 5 for a preselected time period to allow the migration to finish and it is then positioned in a rest phase.

From the above description it will be seen that the invention provides an extremely compact machine able to perform an automatic cycle of operations so as to effect, in succession, a plurality of analyses on a plurality of samples without any interference from the outside which might introduce contamination which could cause loss of precision in the analysis. In use of the machine described above the operator can set, in a completely repeatable manner, all the timing and movements which the machine follows in performing the analysis, thus having the possibility of standardising the process of analysis, and consequently obtaining precise and reliable results.

# CLAIMS

1. A machine for performing blood electrophoresis with an automatic cycle of operations, characterised by the fact that it comprises a support (3) carrying a washing vessel (5), a sample-holder (6) and a treatment vessel (8) adjacent one another, there being provided a carriage (20) movable on the said support (3) and carrying a sampling comb (21) which, upon displacement of the carriage (20), can be selectively introduced into the washing vessel (5), the sample-holder (6) or the treatment vessel (8).

2. An automatic machine for performing blood electrophoresis, according to Claim 1, characterised by the fact that it includes a microprocessor for controlling the operating parameters of the machine and operable to cause the machine to perform an automatic sequence of analysis operations.

3. An automatic machine for performing blood electrophoresis, according to Claim 1 or Claim 2, characterised by the fact that the said comb (21) has a plurality of teeth arranged in a number of separate groups.

4. An automatic machine for performing blood electrophoresis, according to Claim 3, characterised by fact that the said sample-holder (6) has a plurality of groups of cells (7) into which the said teeth of the comb (21) are individually introduceable.

5.     An automatic machine for performing blood electrophoresis, according to Claim 3 or Claim 4, characterised by the fact that the said treatment vessel (8) is separated into a plurality of compartments (9) corresponding to the said plurality of groups of teeth on the comb (21).

6.     An automatic machine for performing blood electrophoresis, according to any of Claims 2 to 5, characterised by the fact that the microprocessor is operable to cause the said carriage (20) to translate in such a way that the comb (21) is positioned in the washing vessel (5), after having performed the preliminary operations, until the end of the migration, and then positions the carriage (20) and comb (21) in a rest position.

7.     An automatic machine for performing blood electrophoresis, according to any preceding Claim, characterised by the fact that the said carriage (20) which supports the comb (21) is supported for substantially horizontal translation movements, together with the comb (21), by means of two guides (34) along which the carriage is slidable, the said carriage (20) being displaced along the guides (34) by a belt (26) which passes over two pulleys (27, 28).

8.     An automatic machine for performing blood electrophoresis, according to any preceding Claim, characterised by the fact that the said comb (21) is carried by a plate (30) suspended at its ends by two pairs of rollers (24), and is provided with guide slots (32) which slide over a pair of guide pins (31).

9.    An automatic machine for performing blood electrophoresis, according to Claim 8, characterised by the fact that the said plate is provided with an aperture (29) in which engages a cam (23) driven to rotate by a geared motor (22) whereby to cause the raising or lowering of the plate (30) and thus of the comb (21).

FIG. 1

1/3

0198803

Fig. 2

1  2  3  4  5  6  8  20  22  34

FIG. 3

0198803